# EUROPEAN PATENT SPECIFICATION

(11) **EP 3 215 587 B1**
(45) Date of publication and mention of the grant of the patent: **25.12.2019**
(21) Application number: 15857433.5
(22) Date of filing: 05.11.2015
(51) Int. Cl.: C09K 19/40, C09K 19/54, G02F 1/13, C09K 19/02, C09K 19/60, G02F 1/139, G02F 1/1337

(54) **BISTABLE LIQUID CRYSTAL DISPERSION DEVICES COMPRISING METAL-ORGANIC MESOGENS AND APPLICATIONS THEREOF**
BISTABILE FLÜSSIGKRISTALLDISPERSIONSVORRICHTUNGEN MIT METALLORGANISCHEN MESOGENEN UND ANWENDUNGEN DAVON
DISPOSITIFS DE DISPERSION DE CRISTAUX LIQUIDES BISTABLES COMPRENANT DES MÉSOGÈNES MÉTALLIQUES-ORGANIQUES ET LEURS APPLICATIONS

(30) Priority: 06.11.2014 US 201462076002 P
(43) Date of publication of application: 13.09.2017
(73) Proprietor: Gauzy Ltd., Tel Aviv (IL)
(72) Inventor: HAKEMI, Hassan-Ali, Macherio (IT); LOFER, Adrian, Kfar Sava (IL); PESO, Eyal, Bat Yam (IL); GAL-FUSS, Dana, Tel Aviv (IL)
(74) Representative: J A Kemp LLP
(86) International application number: PCT/IL2015/051069
(87) International publication number: WO 2016/071908

(56) References cited:
- EP-A1- 0 747 461
- WO-A1-2006/014041
- US-A- 4 423 191
- US-A- 5 843 333
- US-A1- 2009 151 606

## Description

The present invention relates to a bistable liquid crystal film and a method of preparing a bistable liquid crystal device.

US8107050B2 discloses a display material and method and device thereof are provided. The display material is first formed by evenly mixing appropriate weight ratios of DFLCs, incurable nanoparticles, curable nanoparticles, and a photoinitiator. Next, the evenly mixed mixture is disposed between two parallel conducting transparent substrates, wherein an electrical field is conducted thereto and the DFLCs therein aligned to the direction of the applied electrical field. Concurrently, under the applied electrical field, some curable nanoparticles within the evenly mixed mixture, form short nano chains, initiating the photo initiator. The frame structure of short nano chains stabilize both the clear and scattering states, thereby the bistable characteristic was improved and the contrast ratio was enhanced as applied to bistable displays. As mentioned in the patent "The well dispersed mixtures with photo initiator (1369, commercially available from Ciba) were melted and placed between two ITO glasses to be fabricated as a cell without any alignment treatment."

US7238397B2 discloses a cholesteric display is provided including a bistable liquid crystalline mixture contained between a first substrate and a second substrate of a liquid crystal cell, and a polymer network orthogonally oriented with respect to the substrates, thereby defining liquid crystal domains, with a dipolar dopant dissolved in the liquid crystalline mixture. A process for producing a cholesteric display is also provided. Also in this patent the following is mentioned: "The resulting cholesteric mixture is sandwiched between two indium-tin-oxide (ITO) coated glass slides for the substrates".

US20130342773 discloses liquid crystal compositions having a smectic structure, cells containing such a composition sandwiched between a pair of electrodes, an optical device containing one or more multiple cells and a method of switching the optical properties of the composition by applying an electric field thereto. In the patent the following is described: "The application of wires to contact the conducting glass allows a field to be applied across the liquid crystal layer."

US5843333A discloses polymeric dispersed liquid crystal electro-optical device composites containing a polymeric continuous phase and a discontinuous liquid crystal phase comprising a metal-organic mesogen. The continuous phase is a thermosetting, or thermoplastic polymeric composition. The discontinuous phase may also contain a guest-host system consisting of organic liquid crystal hosts that are compatible with the dichroic metal-organic mesogen guest.

WO2006014041A1 discloses a method of manufacturing a reflective polarizing film for a liquid crystal display device. In the method disclosed therein, cholesteric liquid crystal layers having different selective light-reflecting wavelengths are laminated in order from the shortest to the longest wavelength, along with orientation layers that are laminated between the liquid crystal layers to maximize the selective reflection characteristic of the cholesteric liquid crystal.

US4423191A discloses a method for curing a resinous composition comprising an admixture of a thermosetting resin and dielectrically lossy particles having a dielectric constant that is substantially the same as that of the resin. The method disclosed therein comprises subjecting the admixture to a high frequency alternating current electric field, thereby heating the lossy particles and initiating a chemical reaction that cures the resin. Shaped articles of manufacture made by the method are also disclosed.

US2009151606A1 discloses a method for retrofitting an LCD film onto an existing surface. The method disclosed therein comprises removing a section of a desk top to create a rectangular hole; installing a support panel assembly in the rectangular hole; attaching a sliding keyboard and mouse platform and damper assemblies to the underside of the desk top and the support panel assembly; and attaching the flat panel display to the support panel assembly.

EP0747461A1 discloses a method of manufacturing polymer-stabilized liquid crystals on large flexible films, the polymer-stabilized liquid crystals containing microparticles or microspacers. The method comprises placing a fluid liquid crystal composition comprising liquid crystal, a prepolymer or polymer suspension, and microparticles between flexible conductive substrates; laminating the substrates together; and curing the fluid liquid crystal composition comprising the prepolymer to form a polymer stabilized liquid crystal. In preferred embodiments of the invention, the prepolymer or polymer is mesogenic.

Efforts have been made to optimize the manner in which one can control electromagnetic radiation passing through a window, e.g., in residences, commercial buildings, automobiles, etc. Such control may be to provide privacy, reduce glare from ambient sunlight, or to control harmful effects of ultraviolet light. Technology associated with such light control has evolved significantly over the conventional window shade or blind.

One approach to electromagnetic radiation control uses passive films, such as high reflectivity films, heat saving films, and fade-protection films. However, such films generally result in a constant reduction in interior light and loss in visibility. Another approach uses glass panels having radiation transmission characteristics that absorb infrared and ultraviolet wavelengths, while transmitting visible wavelengths.

Further approaches to electromagnetic radiation control use "smart window" technology, wherein light transmission characteristics may be electrically controlled in order to meet lighting needs, minimize thermal load on heating and/or cooling systems, provide privacy within interior spaces of buildings, vehicles and the like, or control harmful effects associated with ultraviolet light exposure.

There are two general categories of chromogenic switchable glazing or smart windows, namely: non-electrically activated switchable glazings and electrically activated switchable glazings. The non-electrically activated types of chromogenic switchable glazing are based on photochromies, thermochromics and thermotropics. The most common electrically activated types of chromogenic switchable glazing are based on polymer dispersed liquid crystals (PDLC), dispersed particle systems (DPS) and electrochromics.

In general, PDLC technology involves phase separation of nematic liquid crystal from a homogeneous liquid crystal containing droplets in a polymer matrix. The phase separation can be realized by polymerization of the polymer. The phase separated nematic liquid crystal forms micro-sized droplets dispersed in the polymer bed. In the off-state, the liquid crystal molecules within the droplets are randomly oriented, resulting in mismatching of the refractive indexes between the polymer bed and the liquid crystal droplets and hence a translucent or light scattering state. When a suitable electric field is applied, the liquid crystal orients such that the refractive indexes between the polymer bed and the liquid crystal droplets are oriented such that a transparent state results. The main disadvantage of the PDLC technology is the inherent haze caused by the optical index mismatching, particularly at large viewing angles. The application of an applied voltage is also necessary to resistance stability.

Electro-optical laminate structures having total-reflection, semi-transparent and totally transparent modes of operation for improved control over the flow of electromagnetic radiation have been developed. Such structures comprise one or more cholesteric liquid crystal (CLC) electromagnetic radiation polarizing panels, also known as polymer stabilized cholesteric texture (PSCT) liquid crystal technology.

PSCT polarizers are used in light valves and electro-optical glazing, or smart window constructions to control light. Such constructions typically comprise two rigid sheets of glass on either side of the CLC layer. The CLC layer comprises crosslinkable or polymerizable material mixed with non-crosslinkable liquid crystals and chiral dopants. Each sheet of glass is covered with a transparent, electrically conductive coating to which electrical connections are attached. The structure is typically mounted within a frame.

PSCT generally may be formed in "normal" mode, "reverse" mode, or bistable mode. In the normal mode, the liquid crystals are in a focal conic state and scatter light. If an electric field is applied to the PSCT device, it reorient themselves parallel to each other along with the electric field and the panel appears transparent, allowing light to pass through the device without scattering of the light.

"Reverse mode" PSCT is similar to the normal mode PSCT product, but with some key differences. The PSCT panel is transparent at zero field and scattering/opaque when a sufficiently high field is applied. Further, an additional orientation layer is generally applied to the substrates before lamination of the liquid crystal mixture. During curing of the panel, which is typically slower than for normal mode product, no electric field is applied to the mixture. Also, the formulation is a modified liquid crystal mixture, and includes higher polymer concentration. Reverse mode PSCT are particularly suitable for automotive type applications when a fail-safe state must be transparent. It is also preferred for use when the main duty of the glazing structure is to act as a transparent window.

Bistable PSCT systems operate in a different manner, whereby a voltage is applied to switch from a scattering/opaque state to a transparent state, and vice versa. At one voltage condition, the material is opaque or optically scattering, because the liquid crystal is randomly oriented as focal conic texture throughout the system, and thus the refractive indices vary spatially. At another voltage condition, the material is transparent, because the liquid crystal is uniformly aligned and the material becomes an optically uniform medium. Although liquid crystals are dielectric media, their conductivities are not zero because of impurities. Switchable windows prepared with PDLCs and PSCTs consume generous amounts of energy since a voltage must be applied in order to sustain one of the optical states. Thus, current liquid crystal switchable windows have a problem in that voltage must be applied to sustain one of the optical states, namely, they are monostable.

Therefore, there remains a need for improved bistable switchable liquid crystal windows switchable between an optically transparent state, upon exposure with a predetermined voltage pulse, and an optically scattered state, upon exposure to a second predetermined voltage, and which remains stable in either state at zero field. Furthermore, there is a long felt need for a bistable liquid crystal film and a method of preparing a bistable switchable liquid crystal device.

According to the present invention there are provided a bistable liquid crystal film and a method of preparing a bistable switchable liquid crystal device as defined in the independent claims.
FIG. 1 a schematic representation of the prior art
FIG. 2 a schematic representation of one embodiment of the present invention.
FIG. 3 a schematic representation of the transparent state and the opaque state of one embodiment of the present invention.

The following description is provided, so as to enable any person skilled in the art to make use of said invention and sets forth the best modes contemplated by the inventor of carrying out this invention. Various modifications, however, are adapted to remain apparent to those skilled in the art, since the generic principles of the present invention have been defined specifically to provide a bistable liquid crystal device comprising metal organic mesogens and metal organic mesogens- dyes.

Retrofit(ting): refers hereinafter to the modification of a conventional window or surface by combining the same in some manner with an enhancement, i.e., a switchable glazing, non- switchable light modulating device, etc.

### Metal organic mesogens and Metal organic mesogens-dves

The structure of the organometallic liquid crystal compound comprise a metal bonded multiaromatic unit of at least two aromatic groups covalently joined, either directly or through other polyvalent organic or inorganic connecting groups. Generally, there are at least two multiaromatic units bonded to the metal. Illustrative of such a structure is the following:

R¹-R²-R³ (1)

where R¹ and R³ are the same or different moieties, each of which provides at least one covalently joined aromatic group (aromatic groups include the unsaturated heterocyclic structures), and R² contains a polyvalent metal, bonded to R¹ and R³ by covalent, ionic or weaker bonding forces. R² may contain a ring atom of a saturated structure or an unsaturated heterocyclic structure and thus constitutes part of the aromaticity of the composition.

The metals included are vanadium, niobium, tantalum, chromium, molybdenum, tungsten, manganese, technetium, rhenium, iron, ruthenium, osmium, cobalt, rhodium, iridium, nickel, palladium, platinum, copper, silver, gold, rare earth metals, or uranium, and the like. The compound (1) may be an anionic or cationic component of a salt in which the counter-ion is a structure that does not adversely affect the liquid crystal properties of compound (1) or combines with compound (1) to provide the liquid crystal properties.

Particularly preferred organometallic liquid crystal compositions useable in the practice of this invention comprise those of the formula: 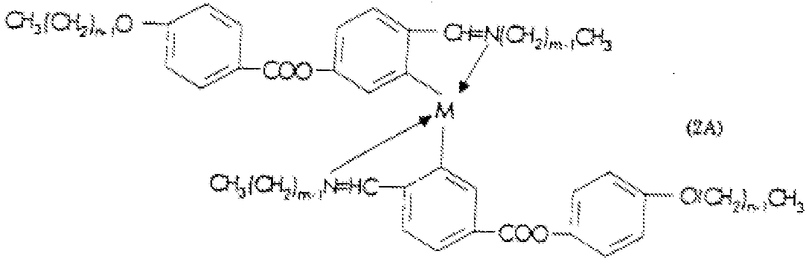 in which M is copper, nickel, vanadyloxide and palladium and n and m are positive numbers such that compound (2) is a liquid crystal, and preferably nematogenic. In general, n and m each have a value of 2 to about 15, sufficient that the compound is mesogenic, preferably such that the compound possesses enantiotropic, monotropic, smectic, nematic and/or cholesteric phases. These compositions are described by Caruso, et al., Liquid Crystals, 1990, vol. 7, no. 3, pp. 421-430 and Liquid Crystals, 1991, vol. 10, no. 1, pp. 85-93.

Similar mesogens have the following formulae: 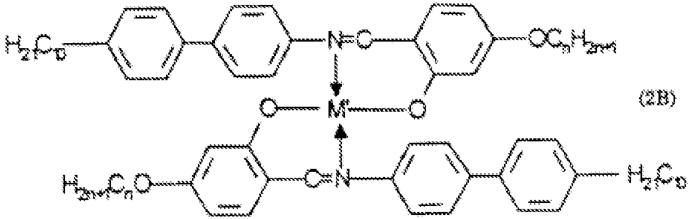 where n is defined above, and M' is oxyvanadium and platinum. See Sadashiva, et al., Abstract, International LCC, Pisa, Italy, 1992, A-P16, p. 38. 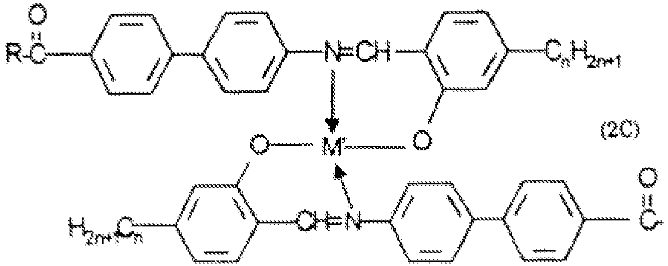 where R is organo such a aryl, alkyl, alkoxyaryl and the like, and n is defined above. M is defined above, and is preferably copper.

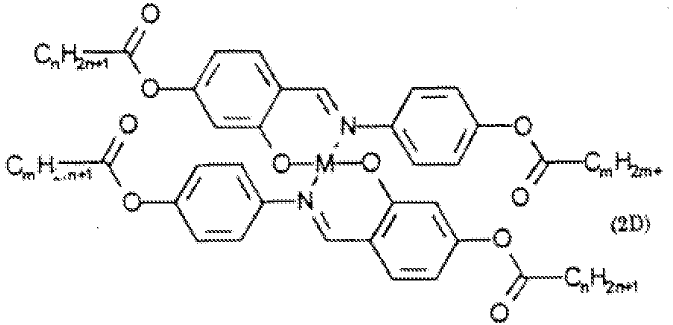

Another compound is described by Giroud-Godquin and Maitlis, supra, at pages 394-395, of the formula: 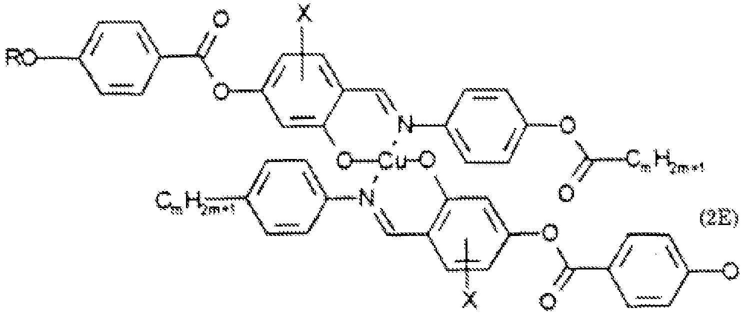 where R is alkyl (C₁₋₂₀)) m is 1-20, and X is alkyl (C₁₋₄). Similar compounds are described by Giroud-Godquin and Maitlis, supra, at pages 395-396, of the formulae: 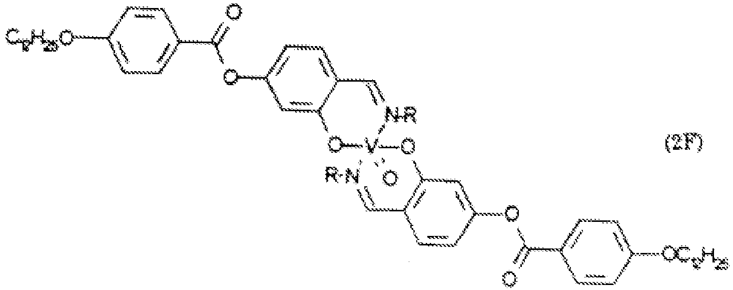 and

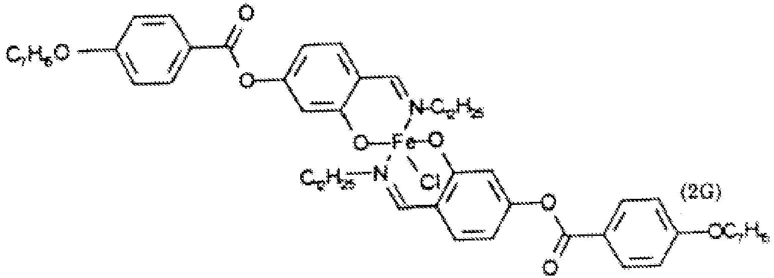

In summary of the compounds of formula (2), M is copper, nickel, vanadyloxide and palladium and n and m are positive numbers of a value such that the compound is a liquid crystal, M' is oxyvanadium and platinum, R is aryl, alkyl and alkoxyaryl and X is alkyl.

Another preferred organometallic liquid crystal compositions useable in the practice of this invention relates to a class of liquid crystal compounds formed by ionic interaction of mesogenic cations with mesogenic anions. Either may contain a metal. One type can be represented by the general formula

L₂MX2 (3)

where L represents an organo-nitrogen mesogen, M is defined above, X represents halide. (See Maitliss, et al. WO87/02693, Publ'd: May 7, 1987) Preferred embodiments of compounds (3) are obtained when the metal is palladium or platinum. Another organometallic mesogens suitable in practicing the invention are those represented by the general formulae:

LRh(CO)₂X (4)

LAuX (5)

where L and X are defined above (see Bruce, et al., J. Chem. Soc, Chem. Comm., 1985, 581; Adams, et al., Liquid Crystal, 1987, 2, 38). Other suitable ionic mesogens are encompassed by the formulae:

[L₂Ag]⁺BF₄ - (6)

[L₂Ag]⁺Y (7)

X⁺Y- (8)

where L is as defined above, Y- is a mesogenic anion and X⁺ is a mesogenic cation. Another class of organometallic mesomorphic compound is represented by the formula

[(R⁴COO)₄M₂] (9)

where R⁴ represents an alkyl or aryl group, for example C₁₁H₂3 and M is as defined above. Methods for making these organometallic mesogens are described by Maitliss, et al. WO87/02693, published May 7, 1987.

An additional class of preferred organometallic liquid crystal compounds is complexes of the formula: 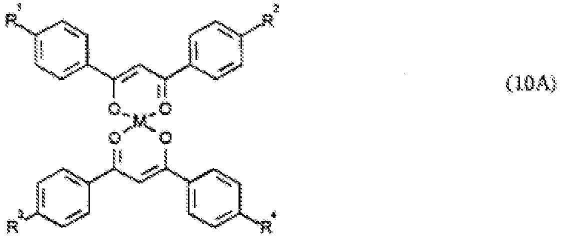 where R¹⁻⁴ are the same or different alkyl (C₁₋₃₀), alkoxy (C₁₋₃₀), aryloxy or cyano groups, and M is described above. A description of these compounds is set forth in, Chemical Abstracts, 97:6461k and by Giroud-Godquin in French Patent 2,486,946.

The same author, (CA, 91:177447F) and French Patent 2,393,839, describes compounds of the formula: (THE FOLLOWINGS ARE FEW IR-ABSORPTIVE MOM STRUCTURES) 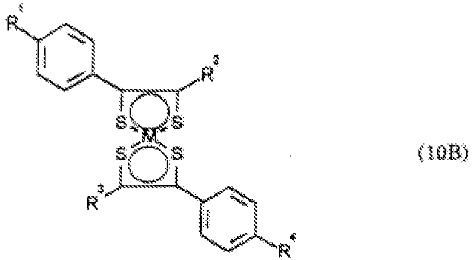 where R^{1,4} are the same or different alkyl (C₁₋₁₄), alkoxy (C₁₋₁₄) or aryl groups, R^{2,3} are hydrogen or the same or different alkyl (C₁₋₄) groups and M is described above where R is alkyl, alkoxy or aryl, R' is H or alkyl, M is described above, preferably platinum, cobalt or vanadium. In that same family of compounds is the mesomorphic transition metal complexes of the formulae: 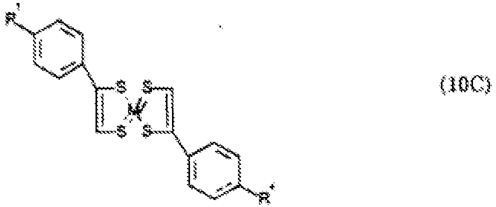 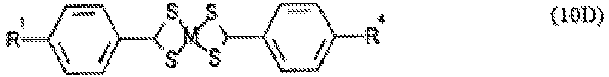 where R^{1,4} and M are defined above. See Bruce, et al., J. Mater. Chem., 1991, 1(5), 857-861.

Another class of desirable organometallic mesogens for use in the practice of the invention, has the formula: 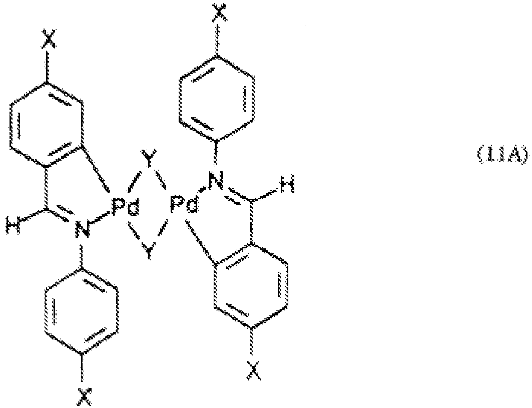 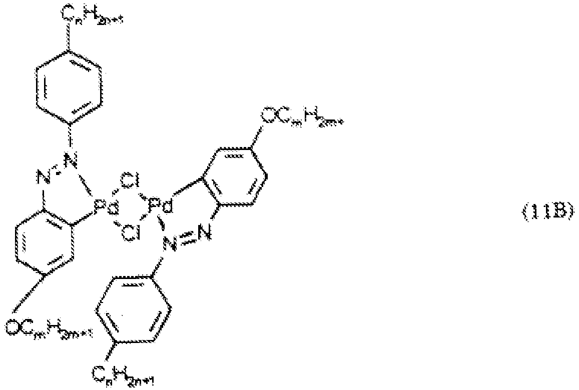 where Y is halogen, preferably chlorine, X is hydrogen, alkyl (C₁₋₁₄), alkoxy (C₁₋₁₄), halogen (preferably chlorine, bromine or iodine), cyano, nitro, and the like, and X' is alkyl (C₁₋₁₄) or alkoxy (C₁₋₁₄). These compounds are generally described in Ros, et al., Liquid Crystal, 1991, vol. 9, no. 1, 77-86, and Ghedini, et al., MATERIALS, 1992, 4, pp. 1119-1123.

Also included are the benzenedithiol metal complex of the formula, which can act as IR-absorptive structures: 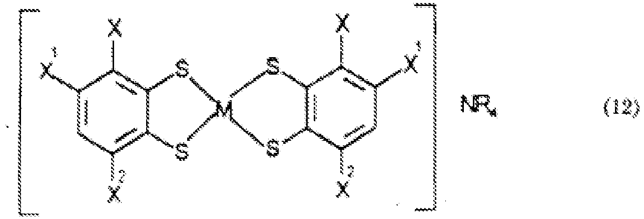 where M is Ni, Pd or Pt, X is Cl or Br, X- and X² are H or Cl when X is Cl and H' or Br when X is Br, and R is C₁₋₁₄ alkyl. See Saito, et al., CA, 105: 2168Hz and U.S. Patent No. 4,508,655.

Giroud-Godquin and Maitlis, supra, at pages 397 and 398, describe another useful class of organometallic liquid crystal compounds suitably employable in the practice of the invention. One class is characterized by the formula: 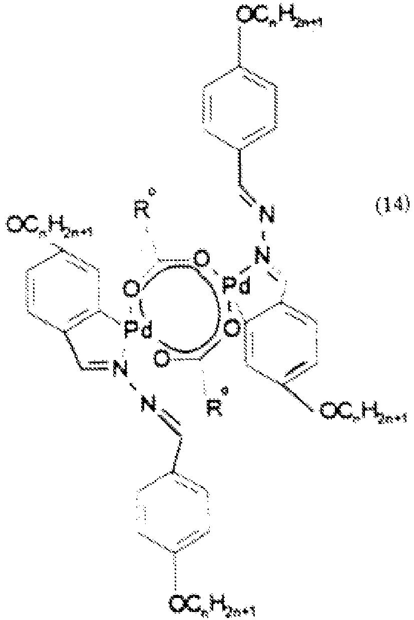 where R^{o} is or OCₘH₂ₘ₊₁, where m is 1 through 20.

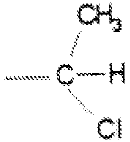

Another series of MOMs are described by Versace et al., Mol. Cryst. Liq. Cryst.. 1992, vol. 212, pp. 313-318, having the formulae: 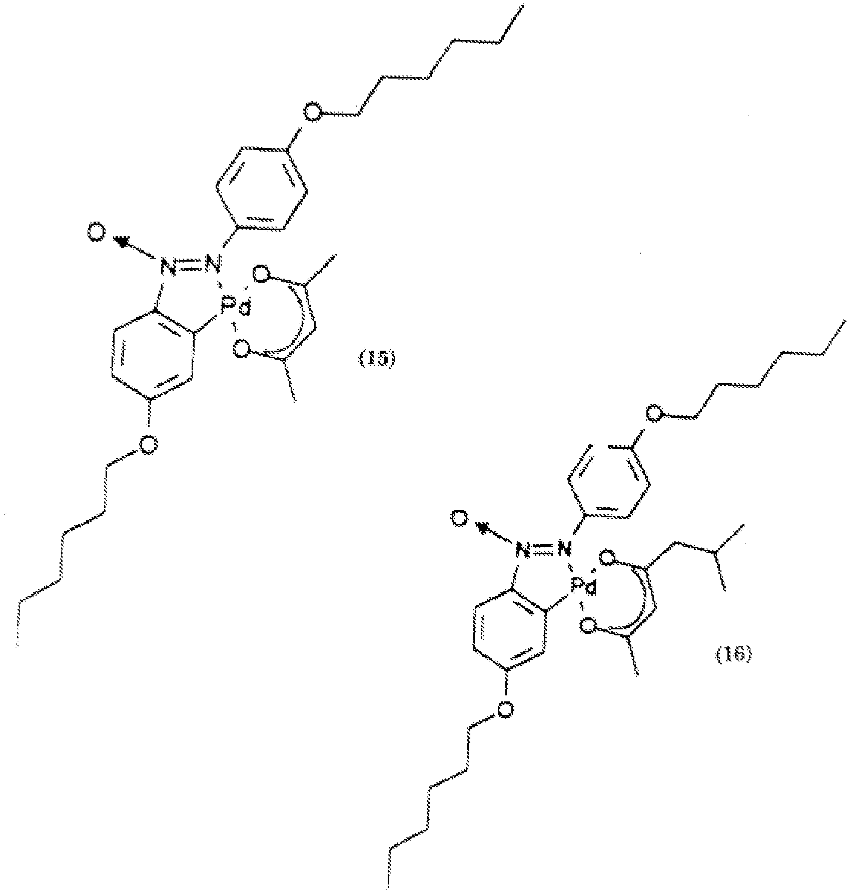 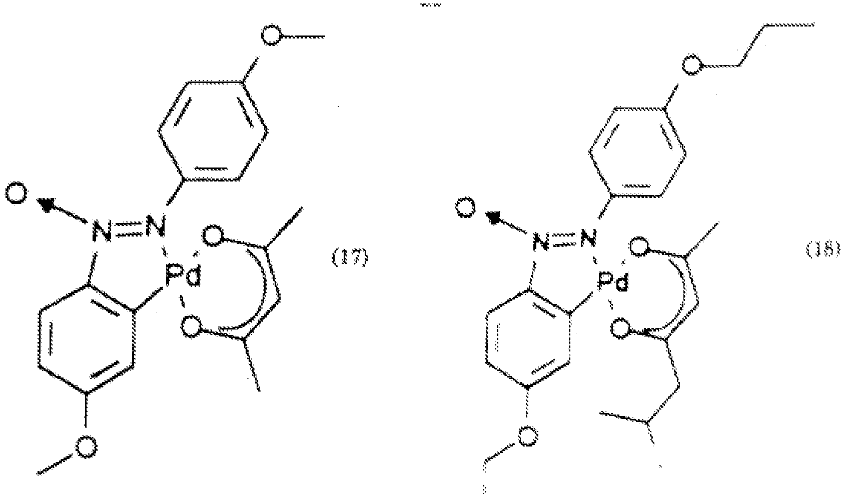 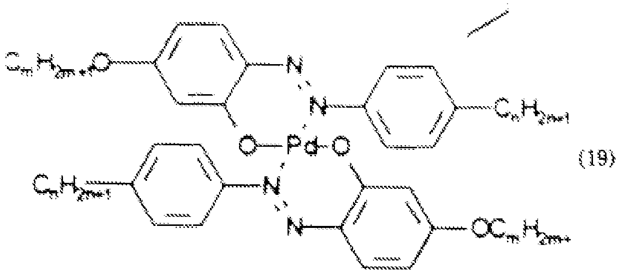 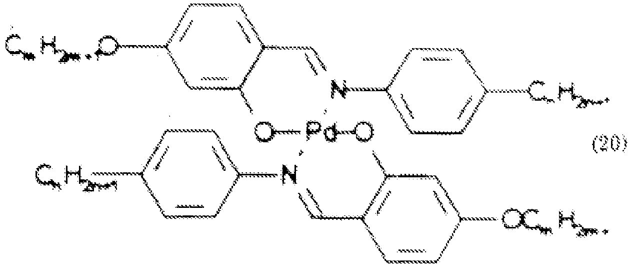 where n and m are whole numbers having a value of 1-20.

Another series of MOM's are copper complexes of phenacyl pyridines having the formula: 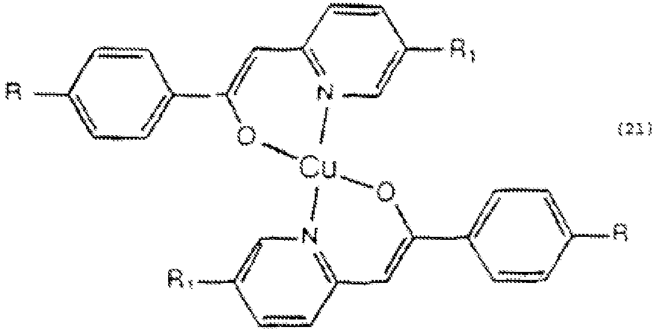 where R and R₁ may be the same or different, and each of R and R₁ may be H, -OC₈H₁₇, or - OC₆H₁₃.

These complexes are synthesized by preparing a solution of 0.2 mmol of free phenacyl pyridine ligand in 4 ml of mixture of acetone/DMF and refluxing for 0.5 hour. 0.4 mmol of solid copper (II) acetate monohydrate is then added and the reaction mixture is refluxed for two hours. Upon cooling, brown crystals appear from the solution. The crystals are separated by filtration and washed with cold acetone.

Where R and R₁ are both H, the resultant copper (II) complex is Copper (II) 2 (phenacyl pyridine). Where R is -OC₈H₁₇ and R₁ is H, the resultant complex is Copper (II) 2-phenacyl-5-octyloxypyridine. Where both R and R₁ are -OC₈H₁₇, the resultant complex is Copper (II) 2-(4-octyloxyphenacyl)-5-octyloxypyridine. Where both R and R₁ are -OC₆H₁₃, the resultant complex is Copper (II) 2-(4-hexyloxyphenacyl)-5-hexyloxypyridine.

Mixtures of these copper complexes of phenacyl pyridines may be prepared for use in the polymer dispersed liquid crystal composites of the present invention. The mixtures may comprise up to 100% of the liquid crystal discontinuous phase of the polymer dispersed liquid crystal composite, such mixtures containing no non-metallic organo liquid crystal. Mixtures of these copper complexes may also be prepared which include non-copper complexed ligands. The presence of the non-complexed ligands in such mixtures increases markedly the solubility of the copper complexes. The copper complex /ligand mixtures may comprise up to 100% of the discontinuous liquid crystal phase of the polymer composites of the present invention. Eutectic mixtures of these complexes may be prepared (see Example 21).

Another class of MOMs suitable for use in the polymer dispersed liquid crystal composite of the present invention are these of Cholesteric (chiral nematics) where the aliphatic group(s) of the chemical structures contain one or more asymectric carbons. The existence of a chiral group in the nematic forming compounds can result in a helicoidal structure in the mesophase. This helicoidal long range effect is identified with a twist or "pitch" factor, which can be measured optically or spectroscopically. If the "pitch" of the cholesteric structure falls within the visible range of the wavelength of light, it reflects the color associated with the "pitch" length, and the phase will be colored. The "pitch" is affected by a number of factors; mostly the "concentration" and the temperature. Addition of cither cholesteric (chiral nematic) MOM's, their ligands or other non-mesogenic solutes with chiral group to a nematic liquid crystal compound or mixture (including nematic MOM's) may create a "cholesteric" phase with a reflective color associated with the "pitch" of the cholesteric mixtures.

The use of "cholesteric" MOM's can provide the possibility of color matching in the mixtures of MOM's or with liquid crystals, where the "absorption" colors due to the metal-complex can be combined and/or matched with that of the "reflection" colors due to cholesteric pitch for a vast range of application in liquid crystal display technology. Descriptions of such cholesteric/ chiral nematic MOM's may be found in M. Ghedini et al., Liq. Cryst., Vol. 15, 33 1 (1993); and M. Ghedini et al., Chem. Mater. 5, 883 (1993). Such cholesteric/chiral nematic compounds may be compounds of the following formulae: 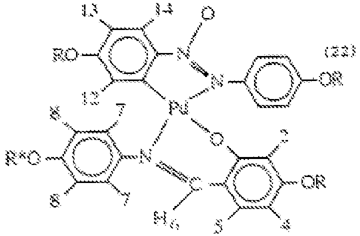 or 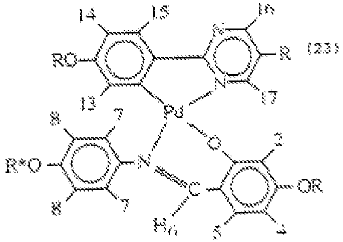 or 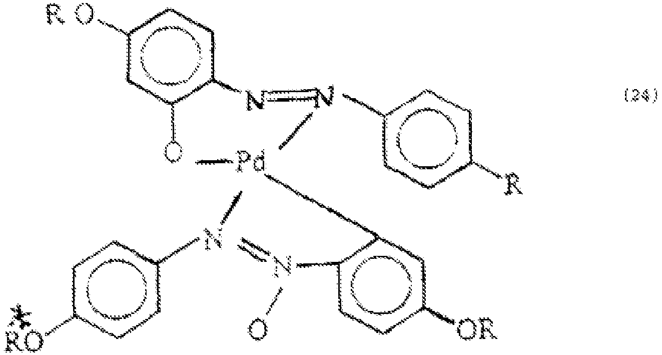 where R is CH₃(CH₂)ₘ-, where m=1-20, and where R* is 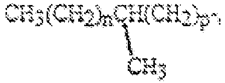 where n and p=1-10.

A description of the synthesis of the palladium complexes of the general formula 24 may be found in Italian patent application VE92A000003.

Other metal-organic liquid crystal compounds suitable for use in the present invention include compounds of the formulae:

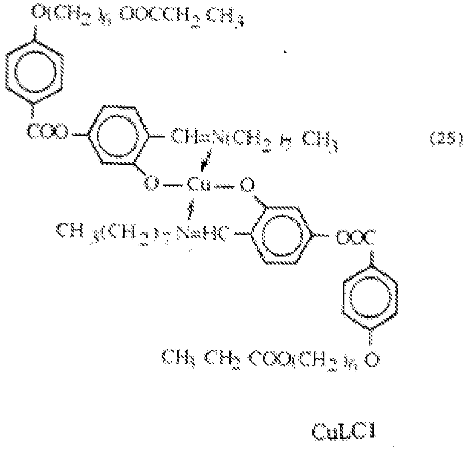

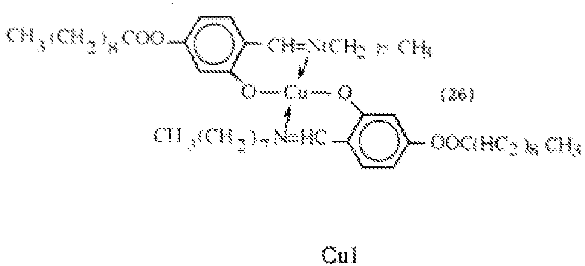

The synthesis of Cu-1 is described in Caruso et al., Macromolecules 24, p. 2606 (1991). CuLCl may be synthesized as follows. 3.92 g of the following compound, 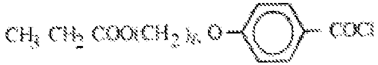 the synthesis of which is described in Caruso et al., Macromolecules 24, p. 2606 (1991), are dissolved in 80 mL dehydrated chloroform and reacted with 3.33 g of the following compound, also described in the above reference: 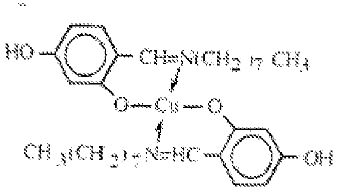 together with 1.92 g of tetrabutylammonium hydrogensulphate and 1.24 g KOH dissolved in 150 mL water. The reaction is performed in a blender for 10 min. The chloroformic phase is then treated several times with water, dried and evaporated to 30 mL volume. Crystallization of CuLC 1 is obtained after addition of 150 mL ethanoi. Yield: 4.49 g (90%).

Another metal-organic mesogen suitable for use in the polymer dispersed liquid crystal composites of the present invention includes compounds having the formula: 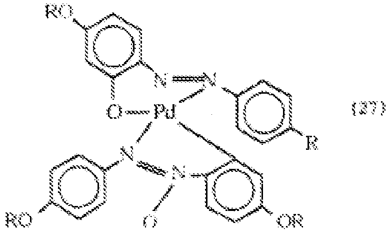 where R is CH₃(CH2)ₘ-, where m=1-20 These compounds are described in Italian patent application VE92A00003.

The invention also contemplates the use of polymeric forms of the aforementioned types of MOMs, such as characterized by Giroud- Godquin and Maitlis, supra, at page 396 (section 7.3).

As should be apparent to those working in this art, the difference in physical properties of the MOMs as compared to the non-metal containing liquid crystal traditionally used in polymer dispersed liquid crystal composites, provides a mechanism of control over the kinetics of phase separation and resin curing to vary and particularly to improve the contrast ratio (transparency/opacity) of polymer dispersed liquid crystal films by controlling (i) the solubility of liquid crystal in the resin, (ii) the rate of droplet formation, (iii) controlling the rate of polymer solidification, and (iv) controlling the liquid crystal droplet morphology (size, density). This is especially the case where MOMs are used in conjunction with conventional, non-metallic liquid crystals in the polymer dispersed liquid crystal composite.

In the preferred embodiment of the invention, the organometallic liquid crystal is used in combination with another compatible liquid crystal composition that is non-metallic. Preferably, these other liquid crystals are of the nematic form or operationally nematic which means that, in the absence of external fields, structural distortion of the liquid crystal is dominated by the orientation of the liquid crystal at its boundaries rather than by bulk effects, such as very strong twists (as in cholesteric material) or layering (as in smectic material). Thus, for example, a liquid crystal material including chiral ingredients which induce a tendency to twist but which cannot overcome the effects of the boundary alignment of the liquid crystal material would be considered to be operationally nematic. More preferably, they also have a positive dielectric anisotropy.

In another preferred embodiment of the invention, the organometallic liquid crystal comprises 100% of the liquid crystal discontinuous phase. In these embodiments, mixtures of compatible organometallic liquid crystals are employed. Such mixtures may be eutectic mixtures of organometallic liquid crystals. In still other embodiments, mixtures (including eutectic mixtures) of organometallic liquid crystals and their ligands are employed. The inclusion of the ligands of the organometallic liquid crystals in mixtures of the organometallic liquid crystals may improve the solubility of the organometallic liquid crystals.

Where the organometallic liquid crystals are uses in combination with non-organometallic liquid crystals, the organometallic liquid crystals should be compatible with the non-organometallic liquid crystals. Preferably, the organometallic liquid crystals should be soluble in the non-organometallic liquid crystals. The combination of the metallo organic mesogens and the conventional liquid crystals generally form a eutectic melting mixture. This is noted by the increase of the liquid crystal mixture's increase in Tₙᵢ. Suitable nematic liquid crystals in compositions typically contain a linear chain of at least one, preferably at least two, aromatic group preferably phenylene or heterocyclic aromatic groups, connected to a linking group such as a covalent bond, a carbonyloxy group, a vinylene group (-CH=CH-), a carbonylimino group, an ethynylene group (-C=C-), an azomethine group (-CH=N-), an azo group (-N=N-), an azoxy group, and the like. Preferred non-metallic liquid crystals comprise cyanobiphenyls, and may be mixed with cyanoterphenyls and with various esters.

Typical organic classes of liquid crystal forming materials contemplated comprise both aromatic and aliphatic organic compounds such as benzylideneanilines generally prepared from the reaction of para-substituted benzaldehyde and parasubstituted aniline; N-(p-alkoxybenzylidene)-p-aminostyrenes prepared from the reaction of the appropriate aldehyde with p-aminostyrene; derivatives of beta sitosterol; active amyl ester of cyano benzylidene amino-cinnamate; p-phenylene containing compounds such as p-phenylene p-alkoxybenzoates; aminoacetophenones; aminopropiophenones; phenylenediamines; chlorophenylenediamines; terephthals; p,p'-disubstituted bibenzyls; p,p'-disubstituted stilbenes; p,p'-disubstituted diphenylacetylenes; p,p'-disubstituted- -1,4-diphenylbutadienes; p,p'-diisubstituted phenyl benzoates; substituted phenyl alkyl carbonates and diphenyl carbonates; p-n-alkyl benzoic acids; p-n-alkoxy benzoic acids; and Schiff bases prepared from p-substituted benzaldehydes and compounds of the following types: p-phenylenediamines, 4,4'-diaminobiphenyls, 4-phenylazoanilines, naphthylamines, and naphtylenediamines.

Specific liquid-crystal compounds include ethyl p-4-ethoxy- benzylideneaminocinnamate; p,p'-azoxybenzoic acid diethyl ester; N-(p-methoxybenzylidene)-p-aminostyrene; N-(p-butoxybenzylidene)-p-aminosty- rene; p-azoxyanisole; p-hexyloxybenzalazine; p-azoxyphenetole; p-anisylidene-p-biphenylamine; p-ethoxy-benzylindene-p-biphenylamine; p-anisylidene-p-aminophenyl acetate; p-ethoxybenzylidene-p-aminophenyl acetate; p-n-hexyloxybenzylidene-p-aminophenyl acetate; p-n-hexoloxybenzylidene-p-aminophenyl acetate; deca-2,4-dienoic acid; 4,4' di- -n-heptoxyazoxybenzene; 4,4' di-n-hexoxyazoxybenzene; 4,4' din-hexoxyazoxybenzene; 4,4' di-n-pentoxyazoxybenzene; 4,4' di-n-butoxyazoxybenzene; 4,4'diethoxy- azoxybenzene; undeca-2,4-dienoic acid; nona-2,4-dienoic acid; 4,4' dimethoxystilbene; 2,5-di(p-ethoxybenzylidene)cyclopentanone;
2,7-di-(benzylideneamino) fluorene; 2-p-methoxybenzylideneaminophenanthrene; 4-methoxy-4"-nitro-p-terphenyl; 4-p-methoxybenzylideneaminobiphenyl; 4,4'-di(benzylideneamino)biphenyl; p-n-hexylbenzoic acid; p-n-propoxybenzoic acid; trans-p-methoxycinamic acid; 6-methoxy-2-naphtholic acid; p-phenylene di-p-anisate; p-phenylene di-p-ethoxybenzoate; p-phenylene di-p-n-hexyloxybenzoate; p-phenylene di-p-n-heptyloxybenzoate; p-phenylene di-p-n-octyloxybenzoate; 1,4-bicyclo[2.2.2.]octylenedi-p-anisate; 1,4-bicyclo[2.2.2]octylene di-p-n-octyloxybenzoate; trans- 1,4-cyclohexylene di-p-n-butoxybenzoate; 4,4'-di(p- methoxybenzylideneamino)dibenzyl; p,p'-diacetoxystilbene; 1,2-di(p-methoxyphenyl)-acetylene; p-(p-acetoxyazo) benzoic acid; 1,4-di-(p-methoxyphenyl)-butadiene; p-anisal-p-anisidine; p,p'dimethoxydibenzal- 1,4-naphthalenediamine; p-n-butylbenzoic acid; p,p'-di-n-butyldiphenylpyridazine; p-(p-cyanobenzal) anisdine; p-(p-methoxybenzoxy benzoic acid, anisal-p-aminozobenzene; 1-(4'-anisalamino)-4-phenylazonaphthalene; N-(p-methoxy-benzylidene)-p-n-butylaniline; N-(p-n-octyloxybenzylidene)-p-n-butylaniline; p-anisylidene-p-phenylazoaniline; N,N'-dibenzylidenebenzidine; N,N'-di(p-n-hexyloxybenzylidene) benzidine; p-bis(-heptyloxybenzoyloxy)benzene; p-n-propoxybenzoic acid; p-n-butoxybenzoic acid; p-n-amyloxybenzoic acid; p-n-hexyloxybenzoic acid; p-n-heptyloxybenzoic acid; p-n-octyloxybenzoic acid; butyl-p-(p-ethoxyphenoxycarbonyl)phenylcarbonate; p-(p-ethoxy-phenylazo)- phenylheptanoate; 4-[(p-hexyloxycarbonyloxybenzylidene)amino]-1-pentyloxybenzene; N-p-(pentyloxycarbonyloxy)benzylidene] -p-anisidine; p-[(p-butoxyphenyl)azo]phenyl butyl carbonate; p-(p-ethoxyphenylazo)phenyl hexanoate; p-(p-ethoxy-phenylazo)phenyl valerate; p-[(p-ethoxybenzylidene)amino]benzonitrile; p-[(p-methoxybenzylidene)amono]benzonitrile; ethyl p-[(p-methoxybenzylidene)amino]cinnamate; p-(p-ethoxyphenylazo)-phenyl crotonate; p-[(p-methoxybenzylidene)amino]-phenyl p-toluate; p-[(p-methoxybenzylidene)amino]-phenylbenzoate; p-[(p-ethoxybenzylidene)amino]phenylbenzoate; N,N'-di(p-methoxybenzylidene)α,α'-biptoluidine; p-anisalazine; 4-acetoxy-3-methoxycinnamic acid; p-acetoxycinnamic acid; 4'-[(p-pentyloxycarbonyloxybenzylidene)aminovalerophenone; diethyl p,p'-azoxydicinnamate; 4-butoxybenzylidene-4'-aminoacetophenone; 4-decyloxybenzylidene-4'-aminoacetophenone; 4-dodecyloxybenzylidene-4'-aminoacetophenone; 4-heptyloxybenzylidene- 4'-aminoacetophenone; 4-hexyloxybenzylidene-4'-aminoacetophenone; 4-methoxybenzylidene-4'-aminoacetophenone; 4-nonyloxybenzylidene-4'-aminoacetophenone; 4-octyloxybenzlidene-4'-aminoacetophenone; 4-pentyloxybenzylidene-4'-aminoacetophenone; 4-propoxybenzylidene-4'-aminoacetophenone; 4-butoxybenzylidene-4'-aminopropiophenone; 4-heptyloxybenxylidene-4'-aminopropiophenone; 4-hexyloxybenzylidene-4'-aminopropiophenone; 4-methoxybenzylidene-4'-aminopropiophenone; 4-nonyloxybenzylidene-4'-aminopropiophenone; 4-octyloxybenzylidene-4'-aminopropiophenone; 4-pentyloxybenzylidene-4'-aminopropiophenone; 4-propoxybenzylidene-4'-aminopropiophenone; bis-(4-bromobenzylidene)-2-chloro- 1,4-phenylenediamine; bis-(4-chlorobenzylidene)-2-chloro- 1 ,4-phe- nylenediamine; bis-(4-n-decyloxybenzylidene)-2-chloro-1,4-phenylenediamine; bis-(4-n-dodecyloxybenzylidene)-2-chloro-1,4-phenylenediamine; bis-(4-n-hexyloxybenzylidene)-2-chloro-1,4-phenylenediamine; bis-(4-methoxybenzylidene)-2-chloro-1,4-phenylenediamine; bis-(4-nonyloxybenzylidene)-2-chloro-1,4-phenylenediamine; bis-(4-n-octyloxybenzylidene)- 2-chloro-1,4-phenylenediamine; bis-(4-n-pentyloxybenzylidene)-2-chloro-1,4-phenylenediamine; bis-(4-bromobenzylidene)-1,4-phenylenediamine; bis-(4-chlorobenzylidene)- 1,4-phenylenediamine, bis-(4-n-decyloxybenzylidene)-1,4-phenylenediamine; bis-(4-n-dodecyloxybenzylidene)-1,4-phenylenediamine; bis-(4-fluorobenzylidene)-1,4-phenylenediamine; bis-(4-n-heptyloxybenzylidene)- 1,4-phenylenediamine; bis-(4-n-hexyloxybenzylidene)- 1,4-phenylenediamine; bis-(4-n-nonyloxybenzylidene)-1,4-phenylenediamine; bis-(4-n-hexyloxybenzylidene)-1,4-phenylenediamine; bis-(4-n-nonyloxybenzylidene)-1,4-phenylenediamine; bis-(4-n-octyloxybenzylidene)- 1,4-phenylenediamine; bis-(4-n-pentyloxybenzylidene)-1,4-phenylenediamine; terephthal-bis-(p-bromoaniline); terephthal-bis-(p-chloroaniline); terephathal-bis-(p-fluoroaniline); terephthal-bis-(p-iodo-aniline), and the like.

Nematic liquid crystalline materials suitable for use with the organometallic liquid crystals include: p-azoxyanisole, p-azoxyphenetole, p-butoxybenzoic acid, p-methoxy-cinnamic acid, butyl-p-anisylidene-p-aminocinnamate, anisylidene p-amino-phenylacetate, p-ethoxy-benzalamino-α-methyl-cinnamic acid, 1,4-bis(p-ethoxybenzylidene) cyclohexanone, 4,4'-dihexyloxybenzene, 4,4'-diheptyloxybenzene, anisal-p-aminoazo-benzene, anisaldazine, α-benzene-azo-(anisal-a'-naphthylamine), n,n'-nonoxybenzetoluidine; anilines of the generic group (p-n-alkoxybenzylidene-p-n-alkylanilines), such as p-methoxybenzylidene p'-n-butylaniline, p-n-butoxybenzylidene-p'-aminophenylacetate, p-n-octoxybenzylidene-p'-aminophenylacetate, p-n-benzylideneproprionate-p'-aminophenylmethoxide, p-n-anixylidene-p'-aminophenylbuterate, p-n-butoxybenzylidene-p'-aminophenylpeatoate and mixtures thereof. Conjugated cyano-organic compounds that are useful are 7, 7', 8, 8'-tetracyanoquinodimethane (TCNQ), (2,4,7,-trinitro-9-fluorenylidene)-malono- nitrile (TFM), p-[N-(p'-methoxybenzylidene)amino]-n-butylbenzene (MBBA), p-[N-(p'-ethoxybenzylidene)amino]-butylbenzene (EBBA), p-[N-(p'-methoxybenzylidene)amino]phenyl butyrate n-butyl-p-(p'-ethoxyphenoxycarbonyl)phenylcarbonate, p-methoxy-p'-n-butylazoxybenzene, p-ethoxy-p'-n-butylazobenzene, p-[N-(p'-methoxybenzylidene)amino]benzonitrile (BBCA), p-[N-(p'-hexylbenzylidene)amino]benzonitrile (HBCA), pentylphenyknethoxy benzoate, pentylphenylpentyloxy benzoate, cyanophenylpentyl benzoate, cyanophenylpentyl benzoate, cyanophenylpentyloxy benzoate, cyanophenylheptyloxy benzoate, cyanophenyloctyloxy benzoate, cyanophenylinethoxy benzoate, and the like.

Desirable nematic liquid crystals frequently comprise cyanobiphenyls, and may be mixed with cyanoterphenyls and with various esters. There are commercially available nematic type liquid crystal mixtures, such as liquid crystal mixture "E7" (Licrilite® BL001 from E. Merck, Darmstadt, Germany, or its subsidiaries such as EM
Industries, Hawthorne, N.Y. and Merck Industrial Chemical, Poole, England) that is a mixture of (by weight), 51% 4'-n-pentyl-n-cyanobiphenyl (5CB), 21% 4'-n-heptyl-n-cyanobiphenyl (7CB)" 16% 4'-n-octoxy-4-cyanobiphenyl,, 12% and 4'-n-pentyl-4-cyanoterphenyl that has a crystal to nematic liquid crystal phase transition temperature of -10°C and a liquid crystal to isotropic phase transition temperature of 60.5°C. Illustrative of other such commercial liquid crystal mixtures are the following:
E-31 is a proprietary mixture of cyanobiphenyls and a non-cyano biphenyl ester available from E. Merck, supra, and having a crystal to nematic crystal phase transition temperature of -9°C and a liquid crystal to isotropic phase transition temperature of 61.5°C. E-44 is a proprietary mixture of cyanobiphenyls, a cyanoterphenyl and a non-cyano biphenyl ester available from E. Merck, supra, and having a crystal to nematic liquid crystal phase transition temperature of -60°C and a liquid crystal to isotropic phase transition temperature of 100°C. E63, from E. Merck, supra, is a liquid crystal mixture that is similar to the E7 with added cyclohexanes. It contains: significant amounts of the commonly known liquid crystal component 5CB, 7CB, lesser amounts of 5CT, lesser amounts of Benzonitrile,4-(4 propyl-1-cyclohexen- 1-yl), commonly known as PCH3, lesser amounts of 4-carbonitrile,4'(4-pentyl-1-cyclohexen-1-yl)- 1, 1'-biphenyl, commonly known as BCH5, and still lesser amounts of [1, 1'-Biphenyl]-4-carboxylie acid, 4'heptyl-4'-cyano[1, 1'-biphenyl]-4-yl ester, commonly known as DB71. K-12 is 4-cyano-4'-butylbiphenyl and has a crystal to nematic liquid crystal phase transition temperature of 48°C. K-18 is 4-cyano-4'-hexylbiphenyl and has a crystal to nematic liquid crystal phase transition temperature of 14.5°C and a liquid crystal to isotropic phase transition temperature of 29°C. K-21 is 4-cyano-4'-heptylbiphenyl and has a crystal to nematic liquid crystal phase transition temperature of 30°C. K-24 is 4-cyano-4'-octylbiphenyl and has a crystal to smectic A liquid crystal phase transition temperature of 21.5°C, a smectic C to nematic liquid crystal phase transition temperature of 33.5°C. and a nematic liquid crystal to isotropic phase transition temperature of 40.5°C. M-15 is 4-cyano-4'-pentoxybiphenyl and has a crystal to nematic liquid crystal phase transition temperature of 48°C. and a liquid crystal to isotropic phase transition temperature of 68°C. M-18 is 4-cyano-4'-hexoxybiphenyl and has a crystal to nematic liquid crystal phase transition temperature of 57°C. and a liquid crystal to isotropic phase transition temperature of 75.5°C. M-24 is 4-cyano-4'-octoxybiphenyl and has a crystal to smectic A liquid crystal phase transition temperature of 54.5°C, a smectic A to nematic liquid crystal phase transition temperature of 67.0°C. and a nematic to isotropic phase transition temperature of 80.0°C. Other desirable Licrilite® liquid crystal mixtures include BL003, BL004, BL009, BL011, BL012, BL032, BL036, BL037, BL045, BL046, ML-1001, ML-1002, as well as TL202, TL203, TL204 and TL205, all obtainable from E. Merck, supra.

TOTN404, available from Hoffman-LaRoche, Basel, Switzerland and Nutley, N.J., is a liquid crystal mixture similar to E7 but with added pyrimidines. It contains approximately 30 weight percent of 4-carbonitrile,4'-pentyloxy-1,1-biphenyl commonly known as 50CB, 15 weight percent of 4-carbonitrile,4'-octyloxy-1, 1-Biphenyl, commonly known as 80CB, 10 weight percent of 4-carbonitrile-4"-pentyl- 1, 1',4', 1"-terphenyl, commonly known as 5CT, 10 weight percent of 4-(5-pentyl-2-pyrimidimyl)-benzonitrile, commonly known as RO-CP-7035, 20 weight percent of 4-(5-heptyl-2-pyrimidimyl)-benzonitrile, commonly known as RO-CP-7037, and 15 weight percent of 4-[5-(4-butylphenyl)-2-pyrimidinyl]benzonitrile, commonly known as RO-CM-7334.

ROTN-570, available from Hoffman-LaRoche is a cyanobiphenyl liquid crystal mixture comprises 51 weight percent of 4-cyano-4'-pentyiuiphenyl, 25 weight percent of 4-cyano-4'-heptylbiphenyl, 16 weight percent of 4-cyano-4'-octyloxybiphenyl, and 8 weight percent of 4-cyano-4'-pentyl-p-terphenyl. Another desirable liquid crystal mixture from Hoffman-LaRoche is TNO623.

The invention encompasses non-homogeneous mixtures of the metallo organic mesogen and the conventional liquid crystals (the non-organometallic liquid crystals). This is accomplished by keeping the different liquid crystals in separate phases. Such phase distinction can be effected by encapsulating either or both of the types of liquid crystals (organometallic liquid crystals vs. non-organometallic liquid crystals) in a polymeric medium. A convenient way of doing this is to encapsulate the liquid crystals, one type or the other, or both types, by NCAP techniques, such as those described above. The NCAP'd liquid crystals can be mixed with the non-encapsulated liquid crystals and the combination, or the NCAP'd mixture alone, can be conventionally polymer dispersed.

Some examples of the metallo-organic mesogens dyes formulas are:
Each mixture consisted of a three-component system corresponding to the following general 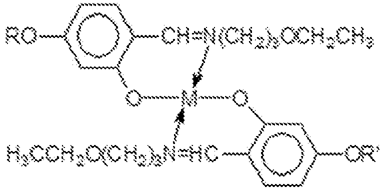 chemical structure:

Two iso-functional were linked (both aldehydes) molecules to react simultaneously with the amine and, eventually, with the metal ion. Although only two iso-functional species were utilized (aldehydes and/or amines), a simultaneous synthesis of more than than two iso-functional species could provide an increasing number of structurally different metal complexes. Six three-component metallomesogen mixtures were prepared at various combinations of metals and ligands. Each component of the mixture designated with the short formula: L-MII-L, consisted of either MII = Ni2+ and VO2+ complexed to different combinations of ligands with aliphatic (L), chiral (L*) or acrylic (L') chains shown in the following structures:

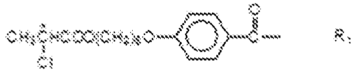

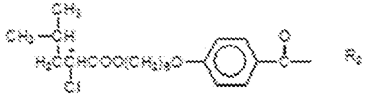

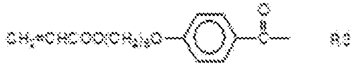

CH3(CH2)7- R4

### EXAMPLE

| **MOM** | **Component-1** | | **Component-2** | | **Component-3** | | **Metal** | **Color** |
|---|---|---|---|---|---|---|---|---|
| | **R** | **R'** | **R** | **R'** | **R** | **R'** | | |
| **Gauzy-1** | R4 | R3 | R4 | R4 | R3 | R3 | **Ni²⁺** | **Pale Green** |
| **Gauzy-2** | R4 | R3 | R4 | R4 | R3 | R3 | **VO²⁺** | **Pink** |

Formula of the Metallomesogen Chemical Mixtures:
Gauzy-1 & Gauzy-2:
25% R&R': -(CH2)7-CH3;
25% R&R': -C6H5-O-(CH2)6-OOC-CH=CH2;
50% R: -(CH2)7-CH3; R': -C6H5-O-(CH2)6-OOC-CH=CH2.

In a preferred embodiment of the present invention the metal-organic mesogens have been modified by the addition of chromophore groups, thus providing a dichroic dye composition comprising metallomesogen (MOM) molecules. This composition is added to liquid crystal devices, thereby providing a film with the following properties: switchable UV and IR transmittance and absorption. The chromophore groups absorb certain wavelengths of and transmit or reflect others. The chromophore groups have two molecular orbitals differing from each other by photon energy within the range of the UV-visible-near IR spectrum.

### Bistable Nematic Film Device

In one embodiment of the invention, a bistable switchable nematic liquid crystal device, such as may be used in a window type of application, is disclosed that can be switched between a transparent state and a light scattered state by a voltage pulse and/or frequency. No further amount of voltage to the device is required in order to maintain either the transparent state or the light scattering state. Therefore, the device is energy-saving and efficient and effective in use.

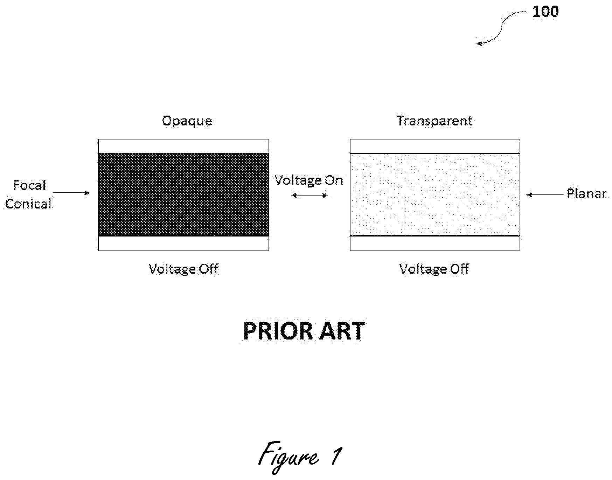

The device includes structures that are electrically switched between an opaque state and a transparent state. Typically, in the opaque state, the liquid crystal molecules scatter light because nematic molecules are randomly oriented and is known as random micro-domain state. Furthermore, in the transparent state, the liquid crystal molecules are aligned perpendicular to the substrate. No reflecting or scattering of light in the visible spectrum occurs. This is known as homeotropic state or texture. A prior art liquid crystal device is shown in FIG. 1. Here, the liquid crystal molecules are switched from the random micro-domains texture to homeotropic texture by applying an electric field to the liquid crystal molecules. The homeotropic structure could be stable or metastable and could return to random opaque state when the electric field is removed. By applying an electric pulse or/and frequency to the liquid crystal molecules in the homeotropic texture, the liquid crystal molecules are switched back to the random micro-domains texture.

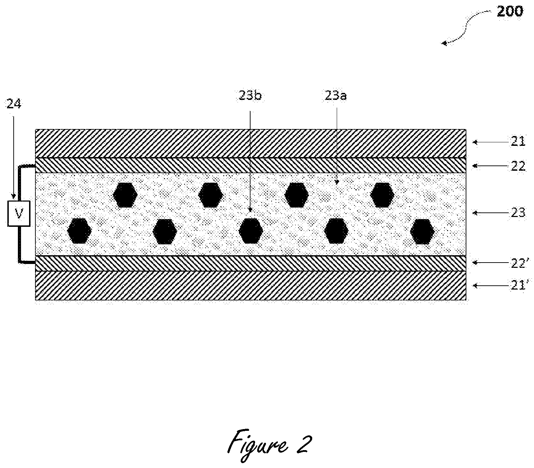

Referring to FIG. 2, the illustrative first embodiment of the electro-optical structure of the invention will be described. The electro-optical structure **200** generally comprises a liquid crystal dispersion material **23** interposed between a pair of optically- transparent electrically-conductive layers **22** and **22'** supported upon a pair of spaced-apart transparent substrates **21** and **21',** each substrate having an interior and exterior surface, respectively, the perimeter edges of which are sealed, and across which a voltage **24** is applied under the control of a microcontroller (not shown). As used herein the term "transparent" means that the film does not absorb a significant amount visible radiation and does not reflect a significant amount of visible radiation, rather, it is transparent to visible radiation. The liquid crystal material **23,** further comprises the liquid crystal dispersions **23a** and the metal-organic mesogenic dyes **23b.** The transparent electrically conductive layers **22** and **22'** may comprise indium tin oxide (ITO), silver, zinc oxide or other optically transparent conductive polymer or like film coating. Chemical vacuum deposition, evaporation, sputtering, or other suitable coating techniques may be used for applying the conductive layers **22** and **22'** to the transparent substrates **21** and **21'.** In some examples, providing a conductive layer on at least one of the substrates may be sufficient.

Examples of transparent substrates **21** and **21'** include polymer films. The polymer films include films made of polyolefin, polyester, polyvinyl chloride, polyvinyl fluoride, polyvinylidene difluoride, polyvinylidene chloride, polyacrylate, polycarbonate, polyurelhane, etc., and combinations thereof. In one embodiment, the flexible films comprise PET films. The transparent substrates **21** and **21'** may also include glass panels and rigid polymeric films, such as polycarbonate, plexiglass, etc.

Electrical leads are attached to the conductive layers **22** and **22'.** A voltage source **24** is shown connected to the conductive layers in order to switch the liquid crystal dispersion layer between different optical states by application of an electric field pulse and/or frequency. The voltage source may be an AC voltage source or a DC-AC inverter and a battery. In addition, the switching power may be supplied by a photovoltaic device that converts solar power to electrical power.

In an example, the liquid crystal material **23** comprises nematic liquid crystals. The liquid crystal material may also include a polymer matrix formed from at least one polymerizable monomer and a photo-initiator. The polymer matrix stabilizes or supports the nematic liquid crystals. Due to strong anchoring of nematic molecules, the polymer matrix facilitates to maintain the stability of both light transmitting and light scattering states without a field applied after switching between the states. The characteristics relate to forming polymer networks where micro-domains of liquid crystal material are dispersed between the networks or into micro-droplet domains. The micro-domains liquid crystals tend to be aligned with the polymer networks through strong surface molecular anchoring, extending between the substrates **21 and 21'** as shown. This favors the transparent homeotropic state due to the aligning and confining effect of the polymer network, facilitating maintaining this condition until being switched to the light scattering state. Upon switching to the light scattering state, the nematic liquid crystal intermolecular interactions with polymer matrix is released by the applied electric pulse and/or frequency, which favors maintaining the light scattering poly-domain state, without applied voltage. In this way, the bistability of the system is achieved.

In another embodiment, the liquid crystal material **23** comprises a polymer matrix having nematic liquid crystals stabilized or supported therein. The polymer matrix is generally formed by polymerization or crosslinking of at least one polymerizable monomer or crosslinkable polymer with non-reactive nematic liquid crystals, and a chiral additive. Polymerization of the liquid crystal mixture is initialized in any suitable manner, as by UV radiation, heating, cooling or solvent evaporation, depending upon the polymer used.

### Bistable Cholesteric Film Device

In one embodiment, the polymer matrix is formed from crosslinking a mixture of a crosslinkable monomer(s), a non-crosslinkable nematic liquid crystal and chiral dopant(s) mixture, or a cholesteric liquid crystal. A liquid crystal polymer stabilized cholesteric texture (PSCT) is formed when a small amount of a UV crosslinkable polymer in its liquid crystal phase and a photoinitiator are mixed with a cholesteric liquid crystal and/or a mixture of nematic liquid crystal with chiral dopant, whose pitch is tuned to the UV, visible or infrared regions. The cross linkable monomer concentration is typically greater than about 5.0% by weight of the total liquid crystal mixture. The mixture is then cured by exposure to UV light, electron beam radiation, heating, cooling or solvent evaporation, depending upon the polymer used, while an electric field, a magnetic field or surface alignment is applied to align the cholestric liquid crystal molecules in either homeotropic (perpendicular) or homogeneous (planar) alignments, or forming the poly-domain structure of focal conic alignment in the absence of external fields. With the field applied during curing, the liquid crystal molecules are aligned in a planar texture (transparent) after the curing.

Particularly useful polymerizable materials include acrylate and methacrylate monomers. Examples of suitable photo-polymerizable monomers include acrylic acid and methacrylic acid, esters thereof, each of which contains an alkyl group, an aryl group, or a cyclo-alkyl group including three or more carbon atoms, and halides thereof. Such photo-curable monomers are, for example, isobutyl acrylate, stearyl acrylate, lauryl acrylate, isoamyl acrylate, 2-ethylhexyl acrylate, n-butyl methacrylate, n-lauryl methacrylate, tri-decyl methacrylate; n- stearyl methacrylate, n-cyclohexyl methacrylate, benzyl methacrylate, isobornyl methacrylate, 2-phenoxyethyl methacrylate, 2,2,3,4,4,4-hexafluorobutyl methacrylate, 2,2,3,4,4,4-hexachlorobutyl methacrylate, 2,2,3,3-tetrachloropropyl methacrylate, 2,2,3, 3-tetrachloropropyl methacrylate, perfluorooctylethyl methacrylate, perfluorooctylethyl acrylate, and perchlorooctylethyl methacrylate. Polyfunctional compounds may also be used. Polyfunctional compounds are, for example, ethylene glycol dimethacrylate, bisphenol-A diacrylate, bisphenol-A dimethacrylate, 1 ,4-butanediol dimethacrylate, 1,6-hexanediol dimethacrylate, trimethylolpropane triacrylate, and tetramethylolmethane tetraacrylate. Other monomers include mono-functional monomer and bi- functional monomer LCI-KSU (Liquid Crystal Institute, Kent State University, USA). Such monomers and polyfunctional compounds may be used independently or in a combination of two or more.

Useful photo-initiators include benzoin methyl ether, as well as other photo-initiators known to those in art.

The process for making the bistable switchable liquid crystal device includes the steps of: (a) providing two transparent substrates coated with a transparent conductive layer, wherein the substrates are separated by spacers to create an area between the substrates, (b) depositing a cholesteric liquid crystal mixture containing a polymerizable monomer in the area between the substrates, (c) sealing the perimeter of the transparent substrates to contain the liquid crystal mixture with the monomer within the area between the substrates and (d) polymerizing the monomer.

In an example, transparent substrates **21 and 21'** are coated with ITO and heated to remove moisture. The cholesteric liquid crystal-monomer mixture is then deposited onto at least one of the substrates. The second transparent substrate is contacted with the first substrate so that the cholesteric liquid crystal-monomer mixture contacts conductive layer **22** and/or **22'** on each of transparent substrate **21 and 21'.**

The cholesteric liquid crystal material can be coated onto the conductive film by any known method suitable for coating liquid materials. For example, the cholesteric liquid crystal-monomer mixture may be applied to the conductive film by in-situ coating-lamination, gravure coating, curtain coating, dip-coating, die-extrusion coating, printing and screen printing.

The matrix **23** is prepared by polymerizing the reactive monomer either in zero electric field or in an electric field effective to align the cholesteric liquid crystal helix pitch axis. In one embodiment, matrix **23** is prepared by mixing a cholesteric liquid crystal with an amount of a reactive monomer. Next, a thin film of the mixture is placed between a pair of conducting layers, wherein the monomer is then allowed to react while an applied electric field is supplied.

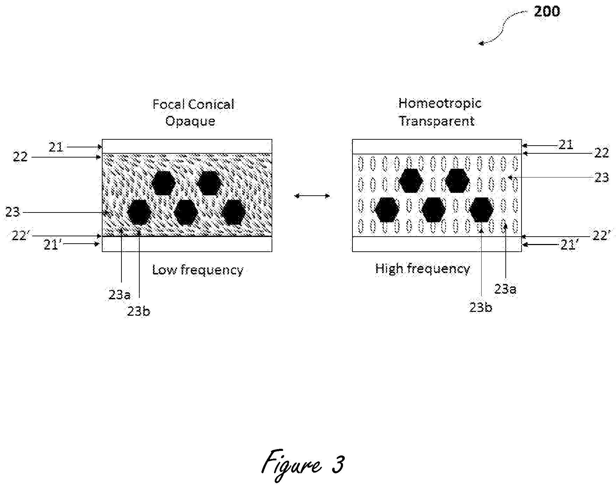

The transparent state is the planar state where the cholesteric liquid crystal molecules are aligned parallel to cell surface direction (perpendicular helix pitch axis), as shown in FIG. 3. The scattering state is the focal conic state where the liquid crystal exists in a randomly oriented polymer domains as also shown in FIG. 3. With proper polymer networks, both planar and focal conic states are stabilized at zero field. The nematic or cholesteric liquid crystal materials used could also exhibit dual dielectric anisotropies, where by an applied AC electric field at low frequency (100Hz) the molecular dielectric anisotropy is positive and the cholesteric liquid crystal texture tends to align in the direction of the electric field. Whereas, at high frequency AC electric field (10 kHz or higher), the nematic or cholesteric liquid crystal molecules exhibit negative dielectric anisotropy tends to align perpendicular to the applied field. Therefore, application or removal of the electric field switches the polymer stabilized cholesteric texture (PSCT) from opaque to transparent state or vise-versa with bistable or zero-field mechanism.

For example in PSCT process, the cholesteric liquid crystal and pre-polymer mixture is then introduced into a 10-30 micron thickness film that includes two parallel flexible films substrates with ITO electrodes. The mixture in the cell is cured under UV irradiation or electron beam to form the bistable switchable liquid crystal film device.

### Bistable Smectic Film Device

The smectic-A liquid crystal phase is a material with molecular layered structure, in which the rod-shaped molecules are aligned normal to the layer planes, having a well-defined interlayer distance. Generally, all smectics are more ordered and viscous than nematic LCs and, in some thermotropic LCs, the smectic phases occur below the nematic phase in the phase diagram. The well-known structural defects in smectic-A are called "focal conic" domains (FCDs). These defects are energetically very stable defects. Therefore, once FCDs and aligned state are formed they can preserve their static defect structures indefinitely until thermal energy or electromagnetic fields are applied. This state of smectic-A is also known as the light scattering or the opaque state. The other optically stable state of the Sm-A is the transparent state, in which the unperturbed smectic layers are uniformly parallel to the substrate surfaces. However, the nucleation of FCDs from the transparent state is highly hindered by the high-energy barrier. Even though surface alignment layers or bulk irregularities were used to nucleate FCD defects, the reversible bi-stability was not reported in these studies. Over the years, only two methods were reported as a viable solution for obtaining reversible bi-stability in smectic-A LCDs. These displays are thermally and laser addressed Sm-A LCDs and electrically addressed (ionically- doped) Sm-A LCs.

In comparison to bistable nematics, a bistable Sm-A structures require greater energy input to create changes in the molecular order. On the other hand, high transparency in homeotropic state and higher scattering density in the focal-conic texture in opaque state, are far better than a cholesteric phase. Thus, higher-resolution bistable devices have been designed by using the Sm- A phase of LCs. The inherent bistability in smectic-A displays can potentially provide excellent viewing angle characteristics, sunlight readability, and low power consumption at both of the stable states. As a result, reversible and controlled switching between two optically stable states of smectic-A liquid crystals have been explored in several ways to realize a Sm-A based bistable LC devices.

In one embodiment of the invention the bistable liquid crystal film is composed by smectic liquid crystal that preserves their orientation after an electrical impulse has been applied.

Based upon the foregoing disclosure, it should now be apparent that the bistable switchable liquid crystal window as described herein will carry out the objects set forth hereinabove. It is, therefore, to be understood that any variations evident fall within the scope of the claimed invention and thus, the selection of specific component elements can be determined without departing from the scope of the claims.

This invention can be used in a wide variety of applications including, but not limited to: advertising, store windows, blinds, decorative glass, and architectural and automotive display, privacy and solar windows.

### Benefits of Metallomesogen dyes in Bistable LC dispersion devices

The combination of metallomesogens and/or ligand and metallomesogen, as well as their eutectic mixtures in the bistable LC dispersion provide an improvement in the electrooptics of the device. For example, in some compounds the voltage needed to activate the focal conic state (V_{fc}) decreases from 18V (of the ligand alone) to 12V (of the compound at 10%), as well as for the nematic state the voltage needed decreases from 33V (of the ligand alone) to 26V (of the compound at 10%). There is also an improvement at the transmission level. In some compounds at 10%, the transmission in focal conic state decreases to 3% and in nematic states increases up to 98.5%.

The solubility of the metallomesogen materials is exhibited either nematic, cholesteric or smectic mesophases. The mixtures show large mesomorphic range and lower transition temperatures than those of the single-components metallomesogens. In most cases, the materials do not crystallize upon super-cooling or quenching and maintained their mesomorphism even below 0°C.

Eutectic mixtures of metallomesogens homologues *per se* and metallomesogens homologues, also with their parent ligands in the bistable LC dispersion are in the scope of the present invention.

It should be emphasized that, depending on their chemical structure, metallomesogen-chromophore compositions could be highly soluble (>5%) in liquid crystal hosts, such as phenyl benzoate ((±)-4-(4-methylhexyloxy) phenyl 4-decyloxybenzoate).

The metallomesogen-chromophore compositions could provide a mesogenic phase in wide temperature range which is very important for exploiting switching bistable polymer dispersed liquid crystal devices in different climatic zones.

A black color of the bipolar polymer dispersed liquid crystal film can be achieved both a single dye and by means of additive synthesis of RGB dye components.

High absorption in UV and near IR spectral range provided by both metallomesogen metal complexation and chromophore compositions is characterized by a combination of strong metal complex bond and strong chomophore absorption wavelengths.

According to the present invention, the metallomesogen-chromophore compositions are addable to liquid crystal guest host solutions used in LCD devices. Large area smart polymer dispersed film or glasses can be used as switchable windows in architecture and automotive industry.

The highly soluble eutectic dye mixtures based on metallomesogen-chromophore compositions can be used in manufacturing highly stable colored switchable glazing and displays.

High electro-optical performance of LCD devices based on metallomesogen-chromophore dyes is harmonized with their extended color stability in UV, visible and IR spectral ranges.

Practical applications of the metallomesogen-chromophore-dye technology are in the fields of colored dynamic architectural windows, automotive, marine, aviation, trains and general ground transportation glazing. The use of such glazing products as UV and IR (heat) dynamic absorbers in the abovementioned fields are also in the scope of the present invention.

It should be emphasized that, LCD devices based on metallomesogen could be also used as UV and IR switchable absorbing glazing and displays.

In a preferred embodiment, the bistable LC dispersion device can be enclosed between two glasses or may be retrofitted on existing interior and exterior architectural glazing, automotive windows, and other interior glazing. A transparent adhesive may be used to stick the panel to the window, which may be integrated with the panel or separately provided. The panel may also be applied to original windows before installation.

### Controller for Bistable LC dispersion device

The film of the present invention requires a unique controller in order to provide the invention with the highest control.

In a further embodiment of the present invention the controller can be connected to Smart home systems, wireless device, PC, etc.

## Claims

1. A bistable liquid crystal film, comprising:
at least one first transparent flexible film coated with conductive material; and,
at least one layer of liquid crystal dispersions comprising metal-organic mesogens, said layer **characterized by** at least two modes (i) scattering mode-A; and (ii) transparent mode-B; disposed between said flexible transparent conductive film and at least one second transparent flexible conductive film;
**characterized in that** said liquid crystal film does not comprise spacers.

2. The bistable liquid crystal film of claim 1, **characterized in that** said liquid crystal dispersion is selected from the group consisting of:
a smectic A composition;
a nematic composition;
a cholesteric composition; and,
any combination thereof.

3. The bistable liquid crystal film of claim 1, **characterized in that** said bistable liquid crystal film is periodically subjected to an electrical impulse/frequency from the source to maintain the transparency or opacity of the film.

4. The bistable liquid crystal film of claim 1, **characterized in that**:
switching from said mode-A to said mode-B is achieved upon application of a high frequency voltage pulse;
switching from said mode-B to said mode-A is achieved upon application of a low frequency voltage pulse; and,
no application of voltage to the device is required in order to maintain said liquid crystal film in either said mode-A or said mode-B.

5. The bistable liquid crystal film of claim 1, **characterized in that** said liquid crystal is **characterized by**:
a liquid crystal dispersion morphology in polymer matrix of nano-droplets, micro-droplets, macro-droplets or a polymer network; and,
the liquid crystal composition is selected from the group consisting of Polymer Dispersed Liquid Crystal (PDLC), Polymer Network Liquid Crystal (PNLC) or Polymer Stabilzed cholesteric Texture (PSCT).

6. The bistable liquid crystal film of claim 1, **characterized in that** said liquid crystal film is made by a method selected from the group consisting of:
phase separation methods;
micro-encapsulation methods; and,
any combination thereof.

7. The bistable liquid crystal film of claim 1, **characterized in that** at least one the following is true:
said film is a flexible electrooptical liquid crystal film;
said flexible transparent conductive film is coated with a reflectivity enhancer; and,
any combination thereof.

8. The bistable liquid crystal film of claim 1, **characterized in that** at least one of the following contains a pattern or a low-definition display or signage:
one of said flexible transparent conductive films;
said bistable liquid crystal film; and,
any combination thereof.

9. The bistable liquid crystal film of claim 1, **characterized in that** said liquid crystal film contains at least one selected from the group consisting of:
dichroic organic and metal-organic dye;
metallized films with static solar-reflection mode;
broad-band cholesteric materials for dynamic solar-reflection mode; and,
any combination thereof.

10. The bistable liquid crystal film of claim 1, **characterized in that** said film is **characterized by** at least one of the following:
said film is a stand-alone device;
said film is retrofitted into an already existing surface;
said film further comprises a controller, said controller connectable to at least one device selected from the group consisting of Smart home systems, wireless devices, and personal computers.

11. The bistable liquid crystal film of claim 1, **characterized in that** said liquid crystal film comprises a eutectic mixture selected from the group consisting of:
eutectic mixtures of organometallic liquid crystals;
eutectic mixtures of organometallic liquid crystals and their ligands; and,
eutectic mixtures of organometallic mesogens and conventional liquid crystals.

12. A method of preparing a bistable switchable liquid crystal device, said method comprising:
providing a dispersion comprising at least one liquid crystal material;
introducing said mixture into a cell comprising first and second transparent flexible films coated with conductive material, and,
curing the cell to form a polymer matrix in the presence of an external electric field;
**characterized in that**:
said step of providing a dispersion comprises introducing metal-organic mesogens into the liquid crystal dispersion; and,
said method does not include any step of introducing spacers into said device.

13. The method of claim 12, **characterized in that** said liquid crystal dispersion is selected from the group consisting of:
a smectic A composition;
a nematic composition;
a cholesteric composition; and,
any combination thereof.

14. The method of claim 12, comprising at least one step selected from the group consisting of:
retrofitting said film into an already existing surface;
connecting said bistable liquid crystal film to a controller, said controller connectable to at least one device selected from the group consisting of Smart home systems, wireless devices and personal computers; and,
any combination thereof.

15. The method of claim 12, **characterized in that** said step of providing a dispersion comprising at least one liquid crystal material comprises providing a dispersion comprising a eutectic mixture selected from the group consisting of:
eutectic mixtures of organometallic liquid crystals;
eutectic mixtures of organometallic liquid crystals and their ligands; and,
eutectic mixtures of organometallic mesogens and conventional liquid crystals.

## Patentansprüche

1. Bistabiler Flüssigkristallfilm, umfassend:
mindestens einen ersten transparenten flexiblen Film, der mit leitendem Material beschichtet ist; und
mindestens eine Schicht aus Flüssigkristalldispersionen umfassend metallorganische Mesogene, wobei die Schicht durch mindestens zwei Moden (i) Streumodus-A und (ii) transparenter Modus-B gekennzeichnet ist; angeordnet zwischen dem flexiblen transparenten leitenden Film und mindestens einem zweiten transparenten flexiblen leitenden Film angeordnet ist;
**dadurch gekennzeichnet, dass** der Flüssigkristallfilm keine Abstandshalter umfasst.

2. Bistabiler Flüssigkristallfilm nach Anspruch 1, **dadurch gekennzeichnet, dass** die Flüssigkristalldispersion ausgewählt ist aus der Gruppe bestehend aus:
einer smektischen A-Zusammensetzung;
einer nematischen Zusammensetzung;
einer cholesterischen Zusammensetzung; und
einer beliebigen Kombination davon.

3. Bistabiler Flüssigkristallfilm nach Anspruch 1, **dadurch gekennzeichnet, dass** der bistabile Flüssigkristallfilm periodisch einem elektrischen Impuls/einer elektrischen Frequenz von der Quelle ausgesetzt wird, um die Transparenz oder Opazität des Films beizubehalten.

4. Bistabiler Flüssigkristallfilm nach Anspruch 1, **dadurch gekennzeichnet, dass**:
Umschalten vom Modus A zum Modus-B auf Anlegen eines hochfrequenten Spannungspulses erreicht wird;
Umschalten vom Modus-B zum Modus-A auf Anlegen eines niederfrequenten Spannungspulses erreicht wird; und
kein Anlegen einer Spannung an die Vorrichtung erforderlich ist, um den Flüssigkristallfilm entweder im Modus A oder im Modus B beizubehalten.

5. Bistabiler Flüssigkristallfilm nach Anspruch 1, **dadurch gekennzeichnet, dass** der Flüssigkristall **gekennzeichnet ist durch**:
eine Flüssigkristalldispersionsmorphologie in Polymermatrix von Nanotröpfchen, Mikrotröpfchen, Makrotröpfchen oder einem Polymernetzwerk; und
die Flüssigkristallzusammensetzung ausgewählt ist aus der Gruppe bestehend aus polymerdispergiertem Flüssigkristall (PDLC), polymerem Netzwerkflüssigkristall (PNLC) oder polymerstabilisierter cholesterischer Textur (PSCT).

6. Bistabiler Flüssigkristallfilm nach Anspruch 1, **dadurch gekennzeichnet, dass** der Flüssigkristallfilm durch ein Verfahren hergestellt wird, ausgewählt aus der Gruppe bestehend aus:
Phasentrennungsverfahren;
Mikroverkapselungsverfahren; und
eine beliebige Kombination davon.

7. Bistabiler Flüssigkristallfilm nach Anspruch 1, **dadurch gekennzeichnet, dass** mindestens eines der Folgenden zutrifft:
der Film ist ein flexibler elektrooptischer Flüssigkristallfilm;
der flexible transparente leitende Film ist mit einem Reflexionsverstärker beschichtet; und
eine beliebige Kombination davon.

8. Bistabiler Flüssigkristallfilm nach Anspruch 1, **dadurch gekennzeichnet, dass** mindestens eines der Folgenden ein Muster oder eine Anzeige oder Beschilderung mit niedriger Auflösung enthält:
einer der flexiblen transparenten leitenden Filme;
der bistabile Flüssigkristallfilm; und
eine beliebige Kombination davon.

9. Bistabiler Flüssigkristallfilm nach Anspruch 1, **dadurch gekennzeichnet, dass** der Flüssigkristallfilm mindestens eines enthält, ausgewählt ist aus der Gruppe bestehend aus:
dichroitischem organischen und metallorganischen Farbstoff;
metallisierten Filmen mit statischem Sonnenreflexionsmodus;
cholesterische Breitbandmaterialien für dynamischen Sonnenreflexionsmodus; und
eine beliebige Kombination davon.

10. Bistabiler Flüssigkristallfilm nach Anspruch 1, **dadurch gekennzeichnet, dass** der Film durch mindestens eines der Folgenden gekennzeichnet ist:
der Film ist eine eigenständige Vorrichtung;
der Film wird in eine bereits vorhandene Oberfläche nachgerüstet;
der Film umfasst ferner eine Steuerung, wobei die Steuerung mit mindestens einer Vorrichtung verbunden werden kann, die aus der Gruppe ausgewählt ist, die aus intelligenten Zuhausesystemen, drahtlosen Vorrichtungen und persönlichen Computern besteht.

11. Bistabiler Flüssigkristallfilm nach Anspruch 1, **dadurch gekennzeichnet, dass** der Flüssigkristallfilm eine eutektische Mischung umfasst, ausgewählt aus der Gruppe bestehend aus:
eutektischen Mischungen aus organometallischen Flüssigkristallen;
eutektischen Mischungen aus organometallischen Flüssigkristallen und ihren Liganden; und
eutektischen Mischungen aus organometallischen Mesogenen und herkömmlichen Flüssigkristallen.

12. Verfahren zur Herstellung einer bistabilen Flüssigkristallvorrichtung, das Verfahren umfassend:
Bereitstellen einer Dispersion umfassend mindestens ein Flüssigkristallmaterial;
Einbringen der Mischung in eine Zelle umfassend erste und zweite transparente flexible Filme, die mit leitendem Material beschichtet sind, und
Aushärten der Zelle, um eine Polymermatrix in Gegenwart eines äußeren elektrischen Felds zu bilden;
**dadurch gekennzeichnet, dass**:
der Schritt des Bereitstellens einer Dispersion Einbringen von metallorganischen Mesogenen in die Flüssigkristalldispersion umfasst; und
das Verfahren nicht einen Schritt des Einbringens von Abstandshaltern in die Vorrichtung beinhaltet.

13. Verfahren nach Anspruch 12, **dadurch gekennzeichnet, dass** die Flüssigkristalldispersion ausgewählt ist aus der Gruppe bestehend aus:
einer smektischen A-Zusammensetzung;
einer nematischen Zusammensetzung;
einer cholesterischen Zusammensetzung; und
einer beliebigen Kombination davon.

14. Verfahren nach Anspruch 12, umfassend mindestens einen Schritt ausgewählt aus der Gruppe bestehend aus:
Nachrüsten des Films in eine bereits vorhandene Oberfläche;
Verbinden des bistabilen Flüssigkristallfilms mit einer Steuerung, wobei die Steuerung mit mindestens einer Vorrichtung verbunden werden kann, die aus der Gruppe ausgewählt ist, die aus intelligenten Zuhausesystemen, drahtlosen Vorrichtungen und persönlichen Computern besteht; und
einer beliebigen Kombination davon.

15. Verfahren nach Anspruch 12, **dadurch gekennzeichnet, dass** der Schritt des Bereitstellens einer Dispersion umfassend mindestens ein Flüssigkristallmaterial umfasst, eine Dispersion bereitzustellen umfassend eine eutektische Mischung ausgewählt aus der Gruppe bestehend aus:
eutektischen Mischungen aus organometallischen Flüssigkristallen;
eutektischen Mischungen aus organometallischen Flüssigkristallen und ihren Liganden; und
eutektischen Mischungen aus organometallischen Mesogenen und herkömmlichen Flüssigkristallen.

## Revendications

1. Film de cristaux liquides bistables, comprenant :
au moins un premier film flexible transparent revêtu d'un matériau conducteur ; et
au moins une couche de dispersions de cristaux liquides comprenant des mésogènes métallo-organiques, ladite couche étant **caractérisée par** au moins deux modes (i) un mode de diffusion A ; et (ii) un mode transparent B ; disposée entre ledit film conducteur transparent flexible et au moins un deuxième film conducteur flexible transparent ;
**caractérisé en ce que** ledit film de cristaux liquide ne comprend pas d'espaceur.

2. Film de cristaux liquides bistables de la revendication 1, **caractérisé en ce que** ladite dispersion de cristaux liquides est choisie dans le groupe constitué par :
une composition A smectique ;
une composition nématique ;
une composition cholestérique ; et
l'une quelconque de leurs combinaisons.

3. Film de cristaux liquides bistables de la revendication 1, **caractérisé en ce que** ledit film de cristaux liquides bistables est périodiquement soumis à une impulsion/fréquence électrique provenant de la source pour conserver la transparence ou l'opacité du film.

4. Film de cristaux liquides bistables de la revendication 1, **caractérisé en ce que** :
la commutation dudit mode A audit mode B est obtenue par l'application d'une impulsion de tension haute fréquence ;
la commutation dudit mode B audit mode A est obtenue par l'application d'une impulsion de tension basse fréquence ; et
la non-application de tension au dispositif est requise afin de conserver ledit film de cristaux liquides soit dans le mode A, soit dans le mode B.

5. Film de cristaux liquides bistables de la revendication 1, **caractérisé en ce que** ledit cristal liquide est **caractérisé par** :
une morphologie de dispersion de cristaux liquides dans une matrice de polymère de nano-gouttes, micro-gouttes, macro-gouttes ou un réseau de polymère ; et
la sélection de la composition de cristal liquide dans le groupe constitué par un cristal liquide dispersé dans des photopolymères (PDLC), un cristal liquide de réseau polymère (PNLC) ou une texture cholestérique stabilisée dans un polymère (PSCT).

6. Film de cristaux liquides bistables de la revendication 1, **caractérisé en ce que** le film de cristaux liquides est fabriqué par un procédé choisi dans le groupe constitué par :
des procédés de séparation de phases ;
des procédés de micro-encapsulation ; et
l'une quelconque de leurs combinaisons.

7. Film de cristaux liquides bistables de la revendication 1, **caractérisé en ce qu'**au moins l'une des assertions suivantes est vraie :
ledit film est un film de cristaux liquides électro-optique flexible ;
ledit film conducteur transparent flexible est revêtu d'un amplificateur de réflectivité ; et
l'une quelconque de leurs combinaisons.

8. Film de cristaux liquides bistables de la revendication 1, **caractérisé en ce qu'**au moins l'un des éléments suivants contient un motif ou un affichage ou marquage basse définition :
l'un desdits films conducteurs transparents flexibles ;
ledit film de cristaux liquides bistables ; et
l'une quelconque de leurs combinaisons.

9. Film de cristaux liquides bistables de la revendication 1, **caractérisé en ce que** ledit film de cristaux liquides contient au moins un élément choisi dans le groupe constitué par :
une teinte organique et métallo-organique dichroïque ;
des films métallisés avec un mode de réflexion solaire statique ;
des matériaux cholestériques à large bande pour un mode de réflexion solaire dynamique ; et
l'une quelconque des leurs combinaisons.

10. Film de cristaux liquides bistables de la revendication 1, **caractérisé en ce que** ledit film est **caractérisé par** au moins l'un des éléments suivants :
ledit film est un dispositif autonome ;
ledit film est adapté dans une surface déjà existante ;
ledit film comprend en outre un dispositif de commande, ledit dispositif de commande pouvant être connecté au moins un dispositif choisi dans le groupe constitué par des systèmes de maison intelligente, des dispositifs sans fil et des ordinateurs personnels.

11. Film de cristaux liquides bistables de la revendication 1, **caractérisé en ce que** ledit film de cristaux liquides comprend un mélange eutectique choisi dans le groupe constitué par :
des mélanges eutectiques de cristaux liquides organométalliques ;
des mélanges eutectiques de cristaux liquides organométalliques et de leurs ligands ; et
des mélanges eutectiques de mésogènes organométalliques et de cristaux liquides classiques.

12. Procédé de préparation d'un dispositif à cristaux liquides bistables, ledit procédé comprenant :
la fourniture d'une dispersion comprenant au moins un matériau à cristaux liquides ;
l'introduction dudit mélange dans une cellule comprenant des premier et deuxième films flexibles transparents revêtus d'un matériau conducteur, et
le durcissement de la cellule pour former une matrice de polymère en présence d'un champ électrique externe ;
**caractérisé en ce que** :
ladite étape de fourniture d'une dispersion comprend l'introduction de mésogènes métallo-organiques dans la dispersion de cristaux liquides ; et
ledit procédé ne comprend aucune étape d'introduction d'espaceurs dans ledit dispositif.

13. Procédé de la revendication 12, **caractérisé en ce que** la dispersion de cristaux liquides est choisie dans le groupe constitué par :
une composition A smectique ;
une composition nématique ;
une composition cholestérique ; et
l'une quelconque de leurs combinaisons.

14. Procédé de la revendication 12, comprenant au moins une étape choisie dans le groupe constitué par :
l'adaptation dudit film dans une surface déjà existante ;
la connexion dudit film de cristaux liquides bistables à un dispositif de commande, ledit dispositif de commande pouvant être connecté à au moins un dispositif choisi dans le groupe constitué par des systèmes de maison intelligente, des dispositifs sans fil et des ordinateurs personnels ; et
l'une quelconque de leurs combinaisons.

15. Procédé de la revendication 12, **caractérisé en ce que** l'étape de fourniture d'une dispersion comprenant au moins un matériau à cristaux liquides comprend la fourniture d'une dispersion comprenant un mélange eutectique choisi dans le groupe constitué par :
des mélanges eutectiques de cristaux liquides organométalliques ;
des mélanges eutectiques de cristaux liquides organométalliques et de leurs ligands ; et
des mélanges eutectiques de mésogènes organométalliques et de cristaux liquides classiques.
